# EUROPÄISCHE PATENTSCHRIFT

(11) **EP 3 969 867 B1**
(45) Veröffentlichungstag und Bekanntmachung des Hinweises auf die Patenterteilung: **20.03.2024**
(21) Anmeldenummer: 20721646.6
(22) Anmeldetag: 04.05.2020
(51) Int. Cl.: G01L 5/24

(54) **SCHRAUBENLASTPRÜFEINRICHTUNG, VERWENDUNG DER SCHRAUBENLASTPRÜFEINRICHTUNG UND VERFAHREN ZUR LASTPRÜFUNG EINER SCHRAUBE**
SCREW LOAD TESTING DEVICE, USE OF THE SCREW LOAD TESTING DEVICE, AND METHOD FOR LOAD TESTING A SCREW
DISPOSITIF DE CONTRÔLE DE CHARGE DE VIS, UTILISATION D'UN DISPOSITIF DE CONTRÔLE DE CHARGE DE VIS ET PROCÉDÉ POUR LE CONTRÔLE DE CHARGE D'UNE VIS

(30) Priorität: 13.05.2019 EP 19174157
(43) Veröffentlichungstag der Anmeldung: 23.03.2022
(73) Patentinhaber: Kistler Holding AG, 8408 Winterthur (CH)
(72) Erfinder: NEUMANN, Gerald, 42499 Hückeswagen (DE); BODENSTEINER, Christoph, 42929 Wermelskirchen (DE)
(86) Internationale Anmeldenummer: PCT/EP2020/062235
(87) Internationale Veröffentlichungsnummer: WO 2020/229204

(56) Entgegenhaltungen:
- EP-A2- 1 764 596
- CN-A- 108 915 748
- US-A1- 2010 162 829
- US-A1- 2011 184 666

## Beschreibung

### Technisches Gebiet

Die Erfindung betrifft eine Schraubenlastprüfeinrichtung, wie sie insbesondere dazu geeignet ist, Festigkeitswerte einer Schraube zu prüfen. Ferner betrifft die Erfindung die Verwendung einer erfindungsgemässen Schraubenlastprüfeinrichtung sowie ein Verfahren zur Lastprüfung einer Schraube unter Verwendung einer erfindungsgemässen Schraubenlastprüfeinrichtung.

### Stand der Technik

Schrauben sind bekannt. Gemäss VDI/VDE 2645 Blatt 2:2014-09 ermöglichen Schrauben eine lösbare Verbindung mit Gewinde, die zwei oder mehrere Teile so zusammenfügt, dass sie sich unter allen vorkommenden Betriebskräften wie ein Teil verhalten.
Die US2011/0184666A1 offenbart ein Verfahren und eine Vorrichtung zur kontrollierten Verspannung einer Schraube mit einem Bauteil. Dazu weist die Vorrichtung ein Gehäuse auf, welches am Bauteil anliegt. Die Schraube und eine auf die Schraube aufgeschraubte Gewindemutter sind im Gehäuse angeordnet, über einen Gewindeabschnitt wird die Schraube mit dem Bauteil verbunden. Daraufhin wird die Schraube im Gehäuse durch Druckbeaufschlagung axial gestreckt. Im druckbeaufschlagten gestreckten Zustand der Schraube wird die Gewindemutter auf das Bauteil geschraubt. Nun wird die Druckbeauf schlagung beendet und die Streckung der Schraube teilweise rückgängig gemacht. Über die Gewindemutter sind Schraube und Bauteil einer verbleibenden Axialkraft kontrolliert verspannt.
Bei der Herstellung von Schrauben werden Chargen von Schrauben stichprobenartig hinsichtlich der Einhaltung von Festigkeitswerten geprüft. Diese sogenannte Lastprüfung erfolgt durch eine Schraubenlastprüfeinrichtung.
Die US2010/0162829A1 lehrt eine Schraubenlastprüfeinrichtung mit einem Gehäuse, in dem eine Gewindemutter haltend befestigt ist. Die Schraube wird mit der Gewindemutter in Wirkverbindung gebracht und im Gehäuse angeordnete Kraftaufnehmer messen ein auf die Schraube aufgebrachtes Anzugsdrehmoment.

Eine solche Schraubenlastprüfeinrichtung mit den Merkmalen des Oberbegriffs des Anspruchs 1 ist aus der WO2008/151799A1 bekannt. Die zur Lastprüfung von konventionellen Schrauben dienende bekannte Schraubenlastprüfeinrichtung weist ein Gehäuse mit mehreren Gehäuseteilen auf, wobei ein Schraubenkopf axial an einer Stirnfläche eines ersten Gehäuseteils anliegt und eine mit einem Gewindeabschnitt der Schraube zusammenwirkende Gewindemutter mit einer Stirnfläche eines zweiten Gehäuseteils zusammenwirkt. Beim Aufbringen eines Anzugsdrehmoments auf die Schraube werden die beiden Gehäuseteile über die Schraube gegeneinander verspannt. Mittels einer Messeinrichtung lässt sich die Verspannung als Axialkraft und/oder Drehmoment erfassen.
Auch die EP1764596A2 und die CN108915748A1 offenbaren jeweils solch eine Schraubenlastprüfeinrichtung mit einem mehrteiligen Gehäuse.

Mittels einer derartigen Schraubenlastprüfeinrichtung lassen sich konventionelle Schrauben sowohl zerstörungsfrei als auch bis zu einer zur Zerstörung der Schraube führenden Last prüfen. Insbesondere folgt die Zerstörung der Schraube bei einer zerstörenden Lastprüfung typischerweise in dem Gewindeabschnitt der Schraube, wodurch die beiden Gehäuseteile nach der Zerstörung der Schraube relativ problemlos voneinander getrennt bzw. Schraubenbestandteile anschliessend relativ einfach aus der Schraubenlastprüfeinrichtung entfernt werden können.

Eine derartige, aus dem Stand der Technik bekannte Schraubenlastprüfeinrichtung ist zu einer zerstörenden Lastprüfung einer Abreissschraube nur bedingt geeignet. Eine Abreissschraube weist entlang ihrer Längsachse zwei hintereinander angeordnete Schraubenköpfe auf. Ein hinterer Schraubenkopf bricht beim Aufbringen eines vorbestimmten Anziehdrehmoments ab. Abreissschrauben werden in vielen technischen Gebieten als Sicherungselement oder Diebstahlsicherung eingesetzt. Denn wenn der hintere Schraubenkopf abgerissen ist, lässt sich der verbleibende Schraubenkörper nur noch mit Spezialwerkzeug aus der Schraubverbindung lösen. Abreissschrauben sind vielfältig, insbesondere was Form und Grösse des hinteren Schraubenkopfs betrifft.
Schraube zusammenwirkende Gewindemutter mit einer Stirnfläche eines zweiten Gehäuseteils zusammenwirkt. Beim Aufbringen eines Anzugsdrehmoments auf die Schraube werden die beiden Gehäuseteile über die Schraube gegeneinander verspannt. Mittels einer Messeinrichtung lässt sich die Verspannung als Axialkraft und/oder Drehmoment erfassen.

Mittels einer derartigen Schraubenlastprüfeinrichtung lassen sich konventionelle Schrauben sowohl zerstörungsfrei als auch bis zu einer zur Zerstörung der Schraube führenden Last prüfen. Insbesondere folgt die Zerstörung der Schraube bei einer zerstörenden Lastprüfung typischerweise in dem Gewindeabschnitt der Schraube, wodurch die beiden Gehäuseteile nach der Zerstörung der Schraube relativ problemlos voneinander getrennt bzw. Schraubenbestandteile anschliessend relativ einfach aus der Schraubenlastprüfeinrichtung entfernt werden können.

Eine derartige, aus dem Stand der Technik bekannte Schraubenlastprüfeinrichtung ist zu einer zerstörenden Lastprüfung einer Abreissschraube nur bedingt geeignet. Eine Abreissschraube weist entlang ihrer Längsachse zwei hintereinander angeordnete Schraubenköpfe auf. Ein hinterer Schraubenkopf bricht beim Aufbringen eines vorbestimmten Anziehdrehmoments ab. Abreissschrauben werden in vielen technischen Gebieten als Sicherungselement oder Diebstahlsicherung eingesetzt. Denn wenn der hintere Schraubenkopf abgerissen ist, lässt sich der verbleibende Schraubenkörper nur noch mit Spezialwerkzeug aus der Schraubverbindung lösen. Abreissschrauben sind vielfältig, insbesondere was Form und Grösse des hinteren Schraubenkopfs betrifft.

Bei der zerstörenden Lastprüfung einer Abreissschraube sind daher die beiden Gehäuseteile der Schraubenlastprüfeinrichtung durch die Axialkraft gegeneinander verspannt, und der Raum zum Anbringen des Spezialwerkzeugs ist konstruktiv durch die Gehäuseteile versperrt. Mit dem Spezialwerkzeug kann man also nicht die entsprechenden Werkzeugangriffsflächen erreichen, sodass eine Entfernung der Schraubenbestandteile aus der Schraubenlastprüfeinrichtung nicht möglich ist.

In der Praxis hat man sich dahingehend beholfen, dass die zu prüfende Abreissschraube vor deren Lastprüfung mit zusätzlichen Werkzeugangriffsflächen in dem Bereich der Abreissschraube ausgestattet wird, die nach dem Abbrechen der eigentlichen Werkzeugangriffsfläche bzw. des Schraubenkopfes von aussen her am Schraubenkörper noch zugänglich sind. Nachteilhaft bei einem derartigen Vorgehen ist einerseits, dass das Anbringen bzw. Ausbilden derartiger, zusätzlicher und lediglich zum Lösen nach der zerstörenden Lastprüfung der Abreissschraube dienenden Werkzeugangriffsflächen einen zusätzlichen Arbeitsaufwand erforderlich macht. Weiterhin wird als besonders nachteilhaft angesehen, dass die mechanische Bearbeitung der Abreissschraube zur Ausbildung der zusätzlichen Werkzeugangriffsflächen typischerweise mit einer thermischen Beanspruchung des Materials des Schraubenkörpers verbunden ist, die ggf. zu einer Gefügeänderung des Materials und somit zu veränderten Festigkeitseigenschaften des Schraubenkörpers führt. Dadurch können die Messergebnisse bei der Lastprüfung einer Abreissschraube ggf. verfälscht sein.

### Darstellung der Erfindung

Aufgabe der vorliegenden Erfindung ist es, eine Schraubenlastprüfeinrichtung bereitzustellen, welche nach einer Lastprüfung bzw. Zerstörung einer Schraube eine problemlose Demontage der Schraube von der Schraubenlastprüfeinrichtung ermöglicht.

Diese Aufgabe wird durch die Merkmale des unabhängigen Anspruchs 1 gelöst.

Die Erfindung nach Anspruch 1 betrifft eine Schraubenlastprüfeinrichtung, mit einem Gehäuse, das dazu ausgebildet ist, eine Schraube und ein mit einem Gewindeabschnitt der Schraube zusammenwirkenden, insbesondere als Gewindemutter ausgebildeten Gegenelement anzuordnen, wobei das Gehäuse ein erstes Gehäuseteil aufweist, das dazu ausgebildet ist, zumindest mittelbar mit einem monolithisch mit der Schraube verbundenen Abschnitt zusammenzuwirken, mit einem zweiten Gehäuseteil, das dazu ausgebildet ist, mit dem Gegenelement zusammenzuwirken, wobei die beiden Gehäuseteile zumindest in Richtung einer Längsachse beweglich zueinander angeordnet sind, und mit einer Messeinrichtung zur Erfassung einer auf die Schraube wirkenden Axialkraft F und/oder zur Erfassung eines auf die Schraube wirkenden Drehmoments M, wobei die beiden Gehäuseteile mittels einer Spanneinrichtung aus einer ersten Position zumindest in eine zweite Position verstellbar sind, und wobei in der ersten Position ein erster Abstand in Richtung der Längsachse zwischen zwei Anlageflächen, die dazu ausgebildet sind, mit der Schraube und dem Gegenelement zusammenzuwirken, geringer ist als ein zweiter Abstand der beiden Anlageflächen in der zweiten Position.

Der Erfindung liegt die Idee zugrunde, dass es nach der (zerstörenden) Lastprüfung der Schraube zur Demontage der Schraubenbestandteile wesentlich ist, dass eine aufgrund der Lastprüfung in die beiden mit der Schraube zusammenwirkenden Gehäuseteile eingebrachte Axialkraft reduziert wird, sodass der noch vorhandene Schraubenkörper auch ohne spezielle Werkzeugangriffsflächen möglichst manuell von seinem im Gehäuse angeordneten Gegenelement (Schraubenmutter) gelöst werden kann.

Vor diesem Hintergrund sieht es die Lehre der Erfindung gemäss ihrem Anspruch 1 vor, die Schraubenlastprüfeinrichtung derart auszubilden, dass die beiden mit der Schraube zusammenwirkenden Gehäuseteile mittels einer Spanneinrichtung aus einer ersten Position zumindest in eine zweite Position verstellbar sind, und dass in der ersten Position ein erster Abstand in Richtung der Längsachse zwischen zwei Anlageflächen, die dazu ausgebildet sind, mit der Schraube und dem Gegenelement zusammenzuwirken, geringer ist als ein zweiter Abstand der beiden Anlageflächen in der zweiten Position.

Vorteilhafte Weiterbildungen der erfindungsgemässen Schraubenlastprüfeinrichtung sind in den Unteransprüchen aufgeführt.

Um nach der Zerstörung bzw. Lastprüfung der Schraube die beiden Gehäuseteile des Gehäuses nicht manuell aus ihrer zweiten, voneinander in einem Abstand angeordneten Position in ihre erste, einen geringeren Abstand zueinander aufweisende Position verstellen zu müssen, sieht es eine besonders bevorzugte Ausgestaltung der Erfindung vor, dass Rückstellmittel vorgesehen sind, die dazu ausgebildet sind, die beiden Gehäuseteile des Gehäuses in Richtung der ersten Position zu verstellen. Dadurch erfolgt bei deaktivierter Spanneinrichtung eine automatische Rückstellung in Richtung der ersten axialen Position der Gehäuseteile.

Hinsichtlich der konkreten Ausgestaltung der Rückstellmittel gibt es unterschiedliche Möglichkeiten. Bevorzugt ist eine mechanische Realisierung, bei der die Rückstellmittel in Form wenigstens eines Federelements ausgebildet sind. Eine derartige Ausbildung hat insbesondere den Vorteil, dass diese ohne zusätzliche Aktivierung bzw. Hilfsstoffe in gewünschter Art und Weise die Rückstellung der Gehäuseteile bewirkt. Bei dem Federelement handelt es sich insbesondere um eine Druckfeder. Eine konkrete konstruktive Umsetzung sieht vor, dass das wenigstens eine Federelement im Bereich der Spanneinrichtung zwischen zwei in Richtung der Längsachse beweglich zueinander angeordneten Teilen der Spanneinrichtung angeordnet ist. Besonders bevorzugt ist es weiterhin, wenn nicht nur ein Federelement bzw. eine Druckfeder zur Anwendung kommt, sondern mehrere Federelemente bzw. Druckfedern. In diesem Fall ist es besonders bevorzugt vorgesehen, dass diese in gleichmässigen Winkelabständen auf einem Teilkreisdurchmesser um die Längsachse der Gehäuseteile angeordnet sind. Ergänzend wird erwähnt, dass anstelle mechanischer Rückstellmittel bzw. Federelemente es auch denkbar ist, die Rückstellmittel beispielsweise unter Verwendung von Druckluft bzw. eines Hydraulischen Mediums als pneumatische bzw. hydraulische Rückstellmittel auszubilden.

Hinsichtlich der Spanneinrichtung zur Erzeugung einer auf die beiden Gehäuseteile in Richtung der zweiten Position wirkenden Vorspannkraft ist es besonders bevorzugt vorgesehen, dass diese als hydraulische Spanneinrichtung ausgebildet ist. Eine hydraulische Spanneinrichtung weist einen Kolben und einen Zylinder auf. Der Kolben wird mit hydraulischem Medium beaufschlagt und fährt den Kolben im Zylinder aus, dabei wird der Kolben im Zylinder geführt. Die Verwendung einer hydraulischen Spanneinrichtung hat insbesondere den Vorteil, dass relativ hohe, in axialer Richtung wirkende Spannkräfte aufgenommen werden können, und da das hydraulische Medium inkompressibel ist, der Kolben dabei auch keine störende Hubänderung vornimmt.

In einer weiteren vorteilhaften Ausgestaltung wird die Druckbeaufschlagung durch das hydraulische Medium mittels einer elektrischen Pumpe oder einer Pneumatik erzeugt.

Um einerseits ein und dasselbe Gehäuse bzw. ein und dieselben Gehäuseteile für unterschiedliche Gewindedurchmesser aufweisende (Abreiss-) Schrauben verwenden zu können, und andererseits zu gewährleisten, dass eine nach der Einbringung von einem Anzugsdrehmoment auf die (Abreiss-) Schraube wirkende Axialkraft und/oder ein auf die (Abreiss-) Schraube wirkendes Drehmoment lediglich im Bereich von Anlageflächen des mit der Schraube zusammenwirkenden Gegenelements bzw. des Schraubenkopfes wirkt/wirken und so von einer Messeinrichtung genau erfasst werden können, sieht es eine konstruktive Weiterbildung des Gehäuses vor, dass das Gehäuse dazu ausgebildet ist, die Schraube zwischen den beiden Anlageflächen unter Ausbildung eines Radialspalts aufzunehmen.

Um die Schraubenlastprüfeinrichtung ohne aufwändige Umbauten bzw. lange Rüstzeiten für unterschiedlich grosse Schraubenformate verwenden zu können, ist es gemäß der beanspruchten Erfindung in der Schraubenlastprüfeinrichtung vorgesehen, dass ein Formatteil mit vorzugsweise mehreren, unterschiedliche Durchmesser aufweisenden Durchgangsöffnungen als Gegenelement für den monolithisch mit der (Abreiss-) Schraube verbundenen Abschnitt vorgesehen ist, und dass das Gegenelement unter axialer Anlage drehfest zum ersten Gehäuseteil des Gehäuses positionierbar ist.

Auch hinsichtlich der Anordnung und Ausbildung der Messeinrichtung gibt es unterschiedliche Möglichkeiten. In der konstruktiv besonders vorteilhaften Ausgestaltung ist es vorgesehen, dass die Messeinrichtung zwischen dem zweiten Gehäuseteil und einem weiteren Teil angeordnet ist, wobei das zweite Gehäuseteil und das weitere Teil in Richtung der Längsachse und um die Längsachse zueinander beweglich angeordnet sind, und wobei die Messeinrichtung in vorzugsweise unmittelbarem Anlagekontakt mit dem zweiten Gehäuseteil und dem weiteren Teil angeordnet ist.

Besonders einfach und wirtschaftlich lassen sich die einzelnen Gehäuseteile des Gehäuses herstellen, wenn diese als Drehteile ausgebildet sind. Vor diesem Hintergrund schlägt es eine weitere Ausgestaltung der Erfindung vor, dass zumindest das erste und zweite Gehäuseteil hülsen- oder ringförmig ausgebildet sind.

Die Erfindung umfasst auch die Verwendung einer soweit beschriebenen erfindungsgemässen Schraubenlastprüfeinrichtung zur Lastprüfung von Abreissschrauben. Eine derartige Verwendung ist deshalb besonders vorteilhaft, da es durch die erfindungsgemässe Ausgestaltung der Schraubenlastprüfeinrichtung auf besonders einfache Art und Weise möglich ist, die nach einer zerstörenden Lastprüfung einer Abreissschraube im Bereich des Gehäuses befindlichen Bestandteile der Schraube demontieren zu können.

Weiterhin umfasst die Erfindung auch ein Verfahren zur Lastprüfung einer Schraube, insbesondere einer Abreissschraube, mittels einer soweit beschriebenen erfindungsgemässen Einrichtung. Das erfindungsgemässe Verfahren zeichnet sich zumindest durch folgende Schritte aus:
- Verstellen des ersten und des zweiten Gehäuseteils von der ersten in die zweite Position unter Vergrösserung des axialen Abstands zwischen zwei Anlageflächen für die Schraube durch Aktivierung der Spanneinrichtung
- Montage der Schraube und des mit der Schraube zusammenwirkenden Gegenelements
- Aufbringen eines Anzugsdrehmoments auf die Schraube
- Deaktivierung der Spanneinrichtung nach Ende der Lastprüfung
- Demontage der Schraube

In einer Weiterbildung des Verfahrens ist es vorgesehen, dass nach der Deaktivierung der Spanneinrichtung die beiden Gehäuseteile durch Rückstellmittel von der zweiten in Richtung der ersten Position bewegt werden.

Eine weitere vorteilhafte Gestaltung des Verfahrens sieht vor, dass zur Demontage der Schraube zwischen der ersten Anlagefläche und einem mit der ersten Anlagefläche zusammenwirkenden Abschnitt der Schraube ein Axialspalt erzeugt wird. Ein derartiges Verfahren hat insbesondere den Vorteil, dass die zuvor auf die Schraube wirkende Axialkraft vollständig aufgehoben ist, sodass ein Lösen der Schraube von dem Gegenelement allein durch manuelles Betätigen bzw. Drehen der Schraube möglich ist.

Weitere Vorteile, Merkmale und Einzelheiten der Erfindung ergeben sich aus der nachfolgenden Beschreibung bevorzugter Ausführungsbeispiele sowie anhand der Zeichnungen.

### Kurze Beschreibung der Zeichnungen

- Fig. 1: zeigt einen Längsschnitt durch eine erfindungsgemässe Schraubenprüfeinrichtung nach einer zerstörenden Prüfung einer Schraube vor deren Demontage aus der Schraubenprüfeinrichtung und
- Fig. 2 bis 5: jeweils in einem perspektivischen Längsschnitt, die Schraubenprüfeinrichtung gemäss der Fig. 1 während unterschiedlicher Phasen der Prüfung einer Schraube.

### Wege zur Ausführung der Erfindung

Gleiche Elemente bzw. Elemente mit gleicher Funktion sind in den Figuren mit den gleichen Bezugsziffern versehen.

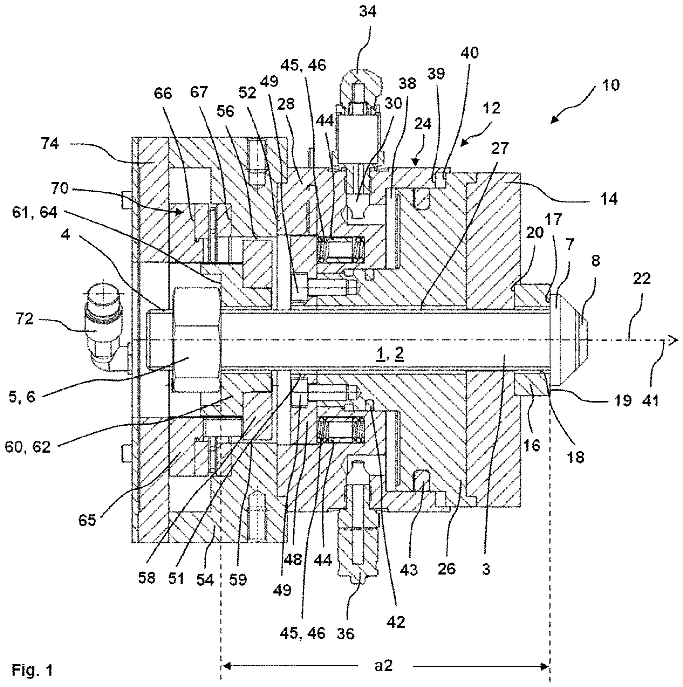

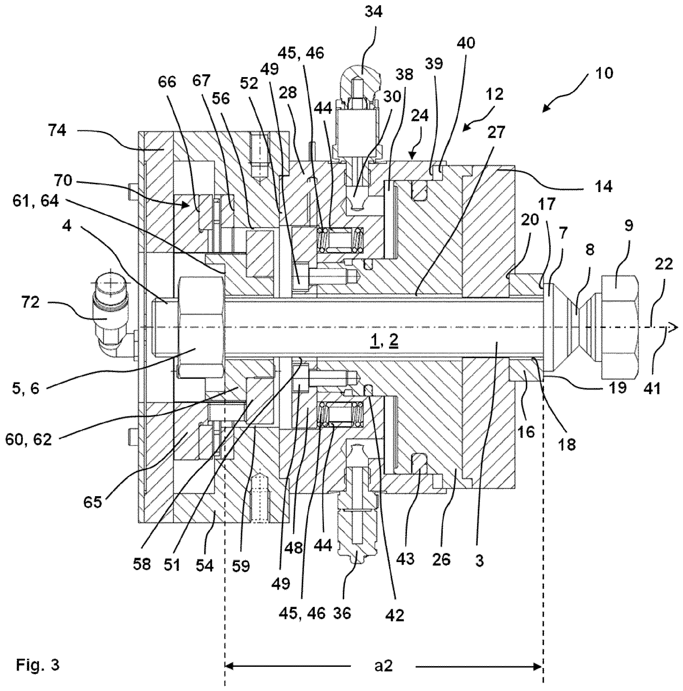

Die in den Figuren dargestellte Schraubenlastprüfeinrichtung 10 dient der zerstörungsfreien oder zerstörenden Lastprüfung von Schrauben 1. Insbesondere ist die Schraubenlastprüfeinrichtung 10 zur Lastprüfung von Abreissschrauben 2 geeignet. Die in der Fig. 3 in unzerstörtem Zustand dargestellte Abreissschraube 2 zeichnet sich durch einen zylindrischen Abschnitt 3 aus, der zumindest an einem stirnseitigen Endbereich einen lediglich in der Fig. 1 erkennbaren Gewindeabschnitt 4 aufweist, der dazu ausgebildet ist, mit einem Gegenelement 5 in Form beispielsweise einer Gewindemutter 6 zusammenzuwirken. Am anderen axialen Endbereich der Abreissschraube 2 weist diese einen (kurzen) zylindrischen Abschnitt 7 auf, an den sich ein sanduhrenförmig ausgebildeter Abscherabschnitt 8 anschliesst, der monolithisch mit einem Kopfabschnitt 9 der Abreissschraube 2 verbunden ist. Der Kopfabschnitt 9 weist in an sich bekannter Art und Weise Werkzeugangriffsflächen zur Einleitung eines Anzugsdrehmoments in die Abreissschraube 2 auf. Die Werkzeugangriffsflächen sind insbesondere als ebene Flächen ausgebildet, um beispielsweise mit einem Schraubenschlüssel bzw. einer entsprechenden Drehmomenteneinrichtung zusammenzuwirken.

Eine derartige Abreissschraube 2 wird in der Praxis dazu verwendet, Teile miteinander zu verbinden, bei denen nach der Montage bzw. nach der Verbindung der Teile sichergestellt sein soll, dass diese nicht mehr einfach voneinander getrennt bzw. demontiert werden können. Hierzu wird bei der Montage der Abreissschraube 2 über den Kopfabschnitt 9 ein derartig grosses Anzugsdrehmoment in die Abreissschraube 2 eingeleitet, dass diese im Bereich des Abscherabschnitts 8 zerstört wird bzw. der Kopfabschnitt 9 im Bereich des geringsten Querschnitts des Abscherabschnitts 8 abschert. Da an dem verbleibenden zylindrischen Abschnitt 7 bzw. dem Abscherabschnitt 8 keine Werkzeugangriffsflächen vorhanden sind, kann eine derartige Abreissschraube 2 nach deren Montage üblicherweise ohne weitere Hilfsmittel bzw. ohne grösseren Aufwand nicht mehr demontiert werden.

Die Schraubenlastprüfeinrichtung 10 dient dazu, bei der Herstellung von Schrauben Chargen von Schrauben stichprobenartig hinsichtlich der Einhaltung von Festigkeitswerten zu prüfen.

Die Schraubenprüfeinrichtung 10 weist ein mehrteilig ausgebildetes Gehäuse 12 auf. Das Gehäuse 12 umfasst ein erstes, platten- bzw. ringförmig ausgebildetes Gehäuseteil 14, das unter axialer Zwischenlage eines Formatteils 16 mit einer ersten Anlagefläche 19 des Formatteils 16 axial an der Stirnfläche 17 des zylindrischen Abschnitts 7 der Abreissschraube 2 auf der dem Abscherabschnitt 8 abgewandten Seite der Abreissschraube 2 anliegt.

Das Formatteil 16 ist im dargestellten Ausführungsbeispiel leistenförmig ausgebildet und weist Durchgangsöffnungen 18 mit unterschiedlichen Durchmessern auf, damit das Formatteil 16 für unterschiedliche Formate bzw. Durchmesser der Abreissschraube 2 verwendet werden kann. Dabei durchsetzt der zylindrische Abschnitt 3 der Abreissschraube 2 eine Durchgangsbohrung 18 mit geringem Radialspiel. Weiterhin weist das erste Gehäuseteil 14 eine der Breite des Formatteils 16 angepasste Längsnut 20 auf, an deren Grund das Formatteil 16 axial anliegt, sodass zwischen dem ersten Gehäuseteil 14 und dem Formatteil 16 eine drehfeste Verbindung um eine Längsachse 22 des Gehäuses 12 ausgebildet ist.

Das erste Gehäuseteil 14 liegt axial, d.h. in einer senkrecht zur Längsachse 22 verlaufenden Ebene, an einer Spanneinrichtung 24 an. Vorzugsweise ist die Spanneinrichtung 24 eine hydraulische Spanneinrichtung. Die Spanneinrichtung 24 weist ein erstes Teil 26 mit einer Durchgangsbohrung 27 auf, die konzentrisch zur Längsachse 22 verläuft. Der Durchmesser der Durchgangsbohrung 27 ist dem Durchmesser des zylindrischen Abschnitts 3 der Abreissschraube 2 derart angepasst, dass zwischen dem zylindrischen Abschnitt 3 und der Durchgangsbohrung 27 stets ein zumindest geringer Radialspalt ausgebildet ist. Das erste Teil 26 der Spanneinrichtung 24 ist radial von einem zweiten Teil 28 der Spanneinrichtung 24 umfasst. Das hülsenförmig ausgebildete zweite Teil 28 weist einen Hydraulikanschlussbereich 30 sowie ein Entlüftungsanschlusselement 36 auf. In dem Hydraulikanschlussbereich 30 ist ein Hydraulikelement 34 angeordnet, das mit einer nicht dargestellten Hydraulikquelle und einer Ventileinrichtung verbunden ist. Das Entlüftungsanschlusselement 36 dient zum Entlüften der Spanneinrichtung 24. Ein ringförmiger Druckraum 38 ist zwischen den beiden Teilen 26, 28 der Spanneinrichtung 24 angeordnet.

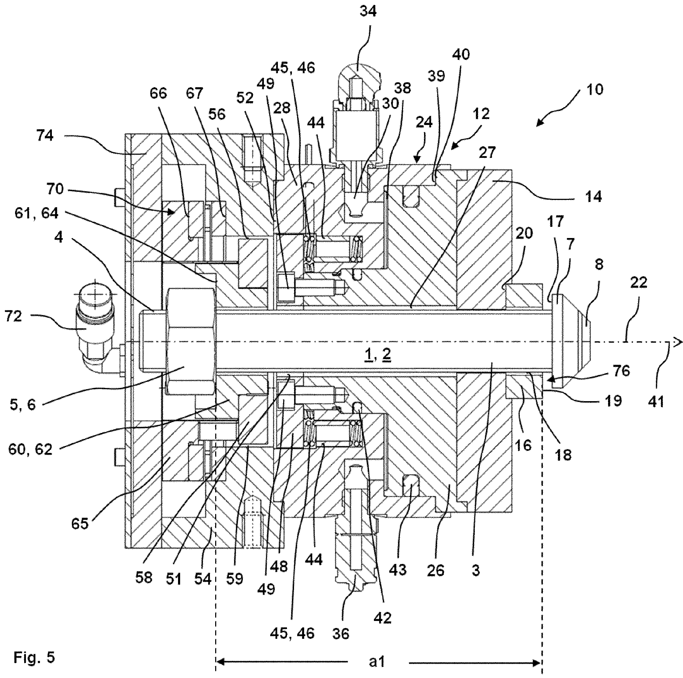

Die beiden Teile 26, 28 der Spanneinrichtung 24 sind in Richtung der Längsachse 22 aus einer ersten Position, in der die beiden Teile 26, 28 mit axial gegenüberliegenden Anschlagflächen 39, 40 aneinander anliegen (Fig. 5), in Richtung des Pfeils 41 (Fig. 1) in eine axial von der ersten Position beabstandete zweite Position bewegbar.

Zur Abdichtung des Druckraums 38 gegenüber der Umgebung sind zwischen den beiden Teilen 26, 28 ringförmige Dichtelemente 42, 43 vorgesehen. Vorzugsweise weist das erste Teil 26 entsprechende Ringnuten auf, um die ringförmigen Dichtelemente 42, 43 aufzunehmen. Diese bevorzugte Ausführungsform ist besonders platzsparend. Alternativ kann aber auch das zweite Teil 28 entsprechende Ringnuten zur Aufnahme der ringförmigen Dichtelemente aufweisen.

In dem ersten Teil 26 der Spanneinrichtung 24 sind auf einem Teilkreisdurchmesser um die Längsachse 22 an einer dem ersten Gehäuseteil 14 abgewandten Stirnfläche mehrere Sacklochbohrungen 44, vorzugsweise in gleichmässigen Winkelabständen zueinander, ausgebildet. In den Sacklochbohrungen 44 ist jeweils ein Federelement 45 in Form einer Druckfeder angeordnet. Die Federelemente 45 dienen als Rückstellmittel 46 dazu, die beiden Teile 26, 28 der Spanneinrichtung 24 in die oben erwähnte erste Position mit einer Rückstellkraft zu beaufschlagen. Hierzu stützen sich die Federelemente 45 an einer ringförmig ausgebildeten Abstützplatte 48 axial ab, die axial mit dem ersten Teil 26 mittels Schrauben 49 verspannt ist. Die Abstützplatte 48 weist ebenfalls eine Durchgangsbohrung 51 zur Aufnahme des zylindrischen Abschnitts 3 der Abreissschraube 2 unter Ausbildung eines Radialspalts auf.

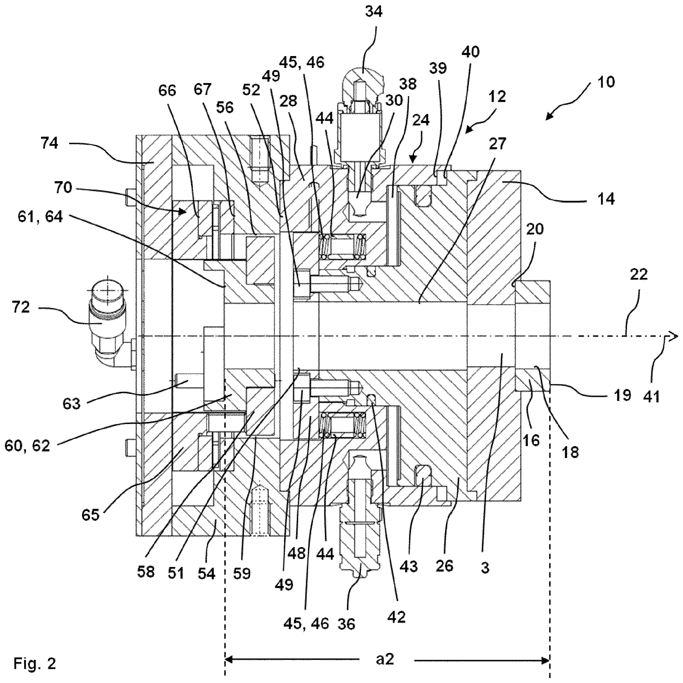

Die Spanneinrichtung 24 taucht axial mit ihrem zweiten Teil 28 auf der dem ersten Gehäuseteil 14 abgewandten Seite in eine Vertiefung 52 eines weiteren Gehäuseteils 54 ein, das Teil einer Messeinrichtung 70 ist. Das weitere Gehäuseteil 54 weist koaxial zur Längsachse 22 einen Bohrungsabschnitt 56 auf, in den eine Ringscheibe 58 unter Ausbildung eines Radialspalts 59 angeordnet ist. Die Ringscheibe 58 nimmt radial einen Teilbereich eines hülsenförmigen Einsatzes 60 auf, der als zweites Gehäuseteil 62 wirkt. Die Ringscheibe 58 und das zweite Gehäuseteil 62 sind beispielsweise mittels mehrerer Spannstifte 63 (Fig. 2) drehfest miteinander verbunden. Der Einsatz 60 bzw. das zweite Gehäuseteil 62 dient der axialen Anlage der Gewindemutter 6 an einer als zweite Anlagefläche 61 wirkenden Stirnfläche 64 des zweiten Gehäuseteils 62. Weiterhin ist die Ringscheibe 58 drehfest mit einer weiteren Scheibe 65 verbunden, z.B. durch eine monolithische Ausbildung zwischen der Ringscheibe 58 und der weiteren Scheibe 65.

Zwischen zwei, in Richtung der Längsachse 22 in einem Abstand zueinander angeordneten, ringförmig um die Längsachse 22 verlaufenden Flächen 66, 67 an der weiteren Scheibe 65 sowie dem weiteten Gehäuseteil 54 ist die oben bereits erwähnte Messeinrichtung 70 aufgenommen. Die beispielsweise in an sich bekannter Art und Weise ausgebildete Messeinrichtung 70 weist ebenfalls rein beispielhaft mehrere (nicht dargestellte) Dehnmessstreifen oder ähnliche Messelemente auf, die dazu dienen, ein auf die Abreissschraube 2 bzw. die Gewindemutter 6 in Richtung der Längsachse 22 wirkende Axialkraft F und/oder ein Drehmoment M zu erfassen. Die Messeinrichtung 70 ist über einen elektrischen Steckeranschluss 72 beispielsweise mit einer nicht dargestellten Auswerte- und/oder Anzeigeeinheit verbunden, die dazu ausgebildet ist, die von der Messeinrichtung 70 erfasste Axialkraft und/oder das von der Messeinrichtung 70 erfasste Drehmoment auszuwerten, anzuzeigen und/oder abzuspeichern.

Die Scheibe 65 ist in axialer Richtung mittels eines Drehmomentmesskörpers 74 über die Messeinrichtung 70 gegen das weitere Gehäuseteil 54 verspannt.

Die Arbeitsweise der soweit beschriebenen Schraubenprüfeinrichtung 10 bei der Lastprüfung einer Abreissschraube 2 wird nunmehr anhand der Figurenfolge der Fig. 2 bis 5 wie folgt erläutert: In der Fig. 2 ist der Zustand dargestellt, bei dem die Abreissschraube 2 an der Schraubenlastprüfeinrichtung 10 noch nicht montiert ist. Der Druckraum 38 ist über den Hydraulikanschlussbereich 30 mit unter einem Vordruck von beispielsweise 30bar stehenden Druckmittel befüllt und ein Rücklauf des Druckmittels aus dem Druckraum 38 ist durch eine entsprechende Stellung eines Ventils in der Hydraulikversorgung verhindert. Der in dem Druckraum 38 herrschende hydraulische Druck bewirkt, dass die Spanneinrichtung 24 bzw. die beiden Teile 26, 28 entgegen der Federkräfte der Federelemente 45 aus ihrer ersten Position in ihre zweite Position bewegt wird/werden. Die zweite axiale Position ist gekennzeichnet durch einen Abstand a2 in Richtung der Längsachse 22 zwischen den beiden Anlageflächen 19 und 61 für die Abreissschraube 2. Die Axialbewegung wird dabei durch eine Anlage zwischen der Abstützplatte 48 und dem ausgefahrenen zweiten Teil 28 der Spanneinrichtung 24 begrenzt, wobei die axiale zweite Position ggf. durch einen Näherungssensor (nicht dargestellt) überwacht wird.

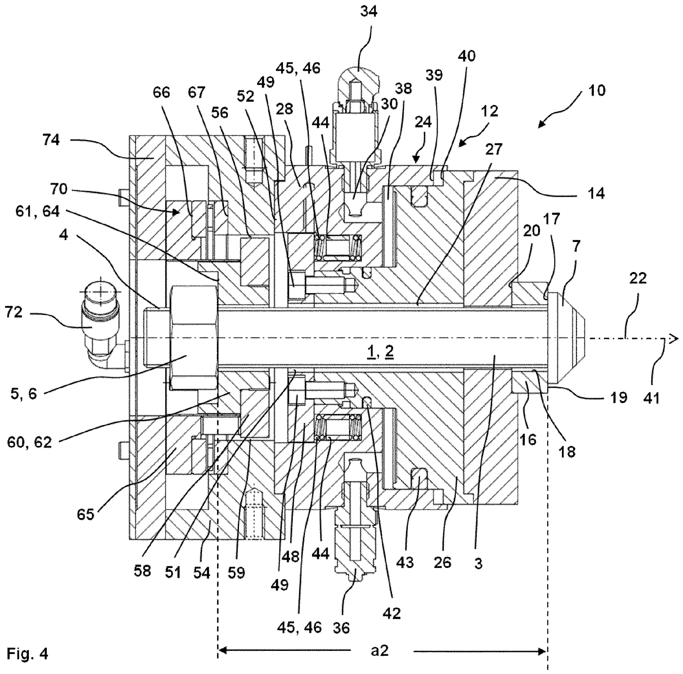

In der Fig. 3 ist die Abreissschraube 2 in der Schraubenlastprüfeinrichtung 10 durch Einschrauben des Gewindeabschnitts 4 in die Gewindemutter 6 montiert. Gleichzeitig ist erkennbar, dass der zylindrische Abschnitt 7 auf der dem Gehäuse 12 zugewandten Seite mit der Stirnfläche 17 axial an dem Formatteil 16 anliegt. Nunmehr wird entsprechend der Darstellung der Fig. 3 über die Werkzeugangriffsflächen des Kopfabschnitts 9 der Abreissschraube 2 ein Anzugsdrehmoment in die Abreissschraube 2 eingeleitet, bis diese im Bereich des Abscherabschnitts 8 zerstört wird. Dies ist in der Fig. 4 dargestellt. Durch Erhöhung des Anzugsdrehmoments der Schraube 1 wird auch der hydraulische Druck des hydraulischen Mediums im Druckraum 38 der Spanneinrichtung 24 vergrössert.

Eine nach dem Einleiten des Anzugsdrehmoments auf die Abreissschraube 2 wirkende Axialkraft F und/oder ein nach dem Einleiten des Anzugsdrehmoments auf die Abreissschraube 2 wirkendes Drehmoment M wird dabei mittels der Messeinrichtung 70 erfasst. Dabei kann der Fachmann nur die Axialkraft F oder nur das Drehmoment M erfassen, oder er kann sowohl die Axialkraft F als auch das Drehmoment M erfassen.

Nach dem Ende der Prüfung ist es erforderlich, die nun unter axialer Verspannung in der Schraubenlastprüfeinrichtung 10 verbliebenen Bestandteile der Abreissschraube 2 zu entfernen. Hierzu wird zunächst ein Rücklauf des hydraulischen Mediums aus dem Druckraum 38 ermöglicht, insbesondere durch Öffnen des nicht dargestellten Ventils. Anschliessend bewegen sich die beiden Teile 26, 28 der Spanneinrichtung 24, hervorgerufen durch die Rückstellmittel 46 bzw. die Federkräfte der Federelemente 45 aus der zweiten axialen Position wieder in ihre ursprüngliche erste Position. Der dabei entstehende axiale Abstand a1 zwischen den beiden Anlageflächen 19 und 61 ist geringer als der zweite axiale Abstand a2. Zusätzlich ist entsprechend der Darstellung der Fig. 5 zwischen dem Formatteil 16 und dem zylindrischen Abschnitt 7 im Bereich der Stirnfläche 17 der Abreissschraube 2 ein Axialspalt 76 von beispielsweise 5mm ausgebildet. Dies bewirkt, dass die Abreissschraube 2 besonders einfach manuell über den zylindrischen Abschnitt 7 bzw. den Abscherabschnitt 8 aus dem Gegenelement 5 bzw. der Gewindemutter 6 ausgeschraubt und in axialer Richtung aus dem Gehäuse 12 entfernt werden kann.

Die soweit beschriebene Schraubenlastprüfeinrichtung 10 kann in vielfältiger Art und Weise abgewandelt bzw. modifiziert werden, ohne vom Erfindungsgedanken abzuweichen. Insbesondere wird darauf hingewiesen, dass die Schraubenlastprüfeinrichtung 10, obwohl lediglich im Zusammenhang mit der Lastprüfung von Abreissschrauben 2 beschrieben, selbstverständlich auch zur Lastprüfung konventioneller Schrauben 1 verwendet werden kann.

### Bezugszeichenliste

- 1: Schraube
- 2: Abreissschraube
- 3: zylindrischer Abschnitt
- 4: Gewindeabschnitt
- 5: Gegenelement
- 6: Gewindemutter
- 7: zylindrischer Abschnitt
- 8: Abscherabschnitt
- 9: Kopfabschnitt
- 10: Schraubenlastprüfeinrichtung
- 12: Gehäuse
- 14: erstes Gehäuseteil
- 16: Formatteil
- 17: Stirnfläche
- 18: Durchgangsöffnung
- 19: erste Anlagefläche
- 20: Längsnut
- 22: Längsachse
- 24: Spanneinrichtung
- 26: erstes Teil der Spanneinrichtung
- 27: Durchgangsbohrung
- 28: zweites Teil der Spanneinrichtung
- 30: Hydraulikanschlussbereich
- 34: Hydraulikelement
- 36: Entlüftungsanschlusselement
- 38: Druckraum
- 39: Anschlagfläche
- 40: Anschlagfläche
- 41: Pfeil
- 42: Dichtelement
- 43: Dichtelement
- 44: Sacklochbohrung
- 45: Federelement
- 46: Rückstellmittel
- 48: Abstützplatte
- 49: Schraube
- 51: Durchgangsbohrung
- 52: Vertiefung
- 54: weiteres Gehäuseteil
- 56: Bohrungsabschnitt
- 58: Ringscheibe
- 59: Radialspalt
- 60: hülsenförmiger Einsatz
- 61: zweite Anlagefläche
- 62: zweites Gehäuseteil
- 63: Spannstift
- 64: Stirnfläche
- 65: weitere Scheibe
- 66: Fläche
- 67: Fläche
- 70: Messeinrichtung
- 72: Steckeranschluss
- 74: Drehmomentmesskörper
- 76: Axialspalt
- a₁: erster Abstand
- a₂: zweiter Abstand

## Patentansprüche

1. Schraubenlastprüfeinrichtung (10), mit einem Gehäuse (12), das dazu ausgebildet ist, eine Schraube (1) und ein mit einem Gewindeabschnitt (4) der Schraube (1) zusammenwirkenden, insbesondere als Gewindemutter (6) ausgebildeten Gegenelement (5) anzuordnen, wobei das Gehäuse (12) ein erstes Gehäuseteil (14) aufweist, das dazu ausgebildet ist, zumindest mittelbar mit einem monolithisch mit der Schraube (1) verbundenen Abschnitt (7) zusammenzuwirken, mit einem zweiten Gehäuseteil (62), das dazu ausgebildet ist, mit dem Gegenelement (5) zusammenzuwirken, wobei die beiden Gehäuseteile (14, 62) zumindest in Richtung einer Längsachse (22) beweglich zueinander angeordnet sind, und mit einer Messeinrichtung (70) zur Erfassung einer auf die Schraube (1) wirkenden Axialkraft F und/oder zur Erfassung eines auf die Schraube (1) wirkenden Drehmoments M,
wobei die beiden Gehäuseteile (14, 62) mittels einer Spanneinrichtung (24) aus einer ersten Position zumindest in eine zweite Position verstellbar sind, dass in der ersten Position ein erster Abstand (a1) in Richtung der Längsachse (22) zwischen zwei Anlageflächen (19, 61), die dazu ausgebildet sind, mit der Schraube (1) und dem Gegenelement (5) zusammenzuwirken, geringer ist als ein zweiter Abstand (a2) der beiden Anlageflächen (19, 61) in der zweiten Position,
**dadurch gekennzeichnet,**
**dass** ein Formatteil (16) mit mehreren, unterschiedliche Durchmesser aufweisenden Durchgangsöffnungen (18) zur Durchsetzung eines zylindrischen Abschnitts (3) der Schraube (1) als Gegenelement für den monolithisch mit der Schraube (1) verbundenen Abschnitt (7) vorgesehen ist, und dass das Formatteil (16) unter axialer Anlage drehfest zum ersten Gehäuseteil (14) positionierbar ist.

2. Schraubenprüfeinrichtung nach Anspruch 1, **dadurch gekennzeichnet, dass** Rückstellmittel (46) vorgesehen sind, die dazu ausgebildet sind, die beiden Gehäuseteile (14, 62) mit einer Rückstellkraft in Richtung der ersten Position zu verstellen.

3. Schraubenprüfeinrichtung nach Anspruch 2, **dadurch gekennzeichnet, dass** die Rückstellmittel (46) in Form wenigstens eines Federelements (45) ausgebildet sind, das im Bereich der Spanneinrichtung (24) zwischen zwei in Richtung der Längsachse (22) beweglich zueinander angeordneten Teilen (26, 28) der Spanneinrichtung (24) angeordnet ist.

4. Schraubenprüfeinrichtung nach einem der Ansprüche 1 bis 3, **dadurch gekennzeichnet, dass** die Spanneinrichtung (24) als hydraulische Spanneinrichtung (24) ausgebildet ist.

5. Schraubenprüfeinrichtung nach Anspruch 4, **dadurch gekennzeichnet, dass** der hydraulische Druck eines hydraulischen Mediums in einem Druckraum (38) der Spanneinrichtung (24) durch Erhöhung eines Anzugsdrehmoments der Schraube (1) vergrösserbar ist.

6. Schraubenprüfeinrichtung nach einem der Ansprüche 1 bis 5, **dadurch gekennzeichnet, dass** das Gehäuse (12) dazu ausgebildet ist, die Schraube (1) zwischen den beiden Anlageflächen (19, 61) unter Ausbildung eines Radialspalts aufzunehmen.

7. Schraubenprüfeinrichtung nach einem der Ansprüche 1 bis 6, **dadurch gekennzeichnet, dass** die Messeinrichtung (70) zwischen dem zweiten Gehäuseteil (62) und einem weiteren Teil (65) angeordnet ist, wobei das zweite Gehäuseteil (62) und das weitere Teil (65) in Richtung der Längsachse (22) und um die Längsachse (22) zueinander beweglich angeordnet sind, und wobei die Messeinrichtung (70) in vorzugsweise unmittelbarem Anlagekontakt mit dem zweiten Gehäuseteil (62) und dem weiteren Teil (65) angeordnet ist.

8. Schraubenprüfeinrichtung nach einem der Ansprüche 1 bis 7, **dadurch gekennzeichnet, dass** zumindest das erste und zweite Gehäuseteil (14, 62) hülsen- oder ringförmig ausgebildet sind.

9. Verwendung einer Schraubenlastprüfeinrichtung (10), die nach einem der Ansprüche 1 bis 8 ausgebildet ist, zur Lastprüfung von Abreissschrauben (2).

10. Verfahren zur Prüfung einer Schraube (1), insbesondere einer Abreissschraube (2), mittels einer Schraubenlastprüfeinrichtung (10), die nach einem der Ansprüche 1 bis 8 ausgebildet ist, umfassend zumindest folgende Schritte:
- Verstellen des ersten und des zweiten Gehäuseteils (14, 62) von der ersten in die zweite Position unter Vergrösserung des axialen Abstands (a1, a2) zwischen zwei Anlageflächen (19, 61) für die Schraube (1) durch Aktivierung der Spanneinrichtung (24);
- Montage der Schraube (1) und des mit der Schraube (1) zusammenwirkenden Gegenelements (5);
- Aufbringen eines Anzugsdrehmoments auf die Schraube (1);
- Deaktivierung der Spanneinrichtung (24) nach Ende der Lastprüfung;
- Demontage der Schraube (1).

11. Verfahren nach Anspruch 10, **dadurch gekennzeichnet, dass** nach der Deaktivierung der Spanneinrichtung (24) die beiden Gehäuseteile (14, 62) durch Rückstellmittel (46) von der zweiten in Richtung der ersten Position bewegt werden.

12. Verfahren nach Anspruch 10 oder 11, **dadurch gekennzeichnet, dass** zur Demontage der Schraube (1) zwischen der ersten Anlagefläche (19) und einem mit der ersten Anlagefläche (19) zusammenwirkenden Abschnitt (7) der Schraube (1) ein Axialspalt (76) erzeugt wird.

13. Verfahren nach einem der Ansprüche 10 bis 12, **dadurch gekennzeichnet, dass** der hydraulische Druck eines hydraulischen Mediums in einem Druckraum (38) der Spanneinrichtung (24) durch Erhöhung eines Anzugsdrehmoments der Schraube (1) vergrössert wird.

## Claims

1. A screw load testing device (10) comprising a housing (12) configured to arrange a screw (1) and a mating element (5) that interacts with a threaded portion (4) of the screw (1) and is in particular formed as a threaded nut (6), said housing (12) comprising a first housing member (14) configured to interact at least indirectly with a portion (7) that is in monolithic connection to the screw (1), further comprising a second housing member (62) configured to interact with the mating element (5), wherein the two housing members (14, 62) are arranged movably with respect to one another at least in the direction of a longitudinal axis (22), said screw load testing device (10) further comprising a measuring device (70) for detecting an axial force F acting on the screw (1) and/or for detecting a torque M acting on the screw (1),
wherein the two housing members (14, 62) are movable from a first position at least into a second position by means of a clamping device (24), in that in the first position a first distance (a1) in the direction of the longitudinal axis (22) between two contact surfaces (19, 61) configured to interact with the screw (1) and the mating element (5), respectively, is smaller than a second distance (a2) between the two contact surfaces (19, 61) in the second position,
**characterized in that**
a size change member (16) comprises a plurality of through-holes (18) having different diameters is provided as mating element for the portion (7) in monolithic connection to the screw (1), and **in that** the size change member (16) can be arranged in a rotationally fixed manner in axial contact with the first housing member (14).

2. The screw testing device according to claim 1, **characterized in that** resetting means (46) are provided which are configured to move the two housing members (14, 62) by a resetting force in the direction of the first position.

3. The screw testing device according to claim 2, **characterized in that** the resetting means (46) are formed as at least one spring element (45) arranged in the area of the clamping device (24) between two members (26, 28) of the clamping device (24) that are arranged movably relative to one another in the direction of the longitudinal axis (22).

4. The screw testing device according to any of the claims 1 to 3, **characterized in that** the clamping device (24) is constructed as a hydraulic clamping device (24).

5. The screw testing device according to claim 4, **characterized in that** the hydraulic pressure of a hydraulic medium in a pressure chamber (38) of the clamping device (24) can be increased by increasing a tightening torque of the screw (1) .

6. The screw testing device according to any of the claims 1 to 5, **characterized in that** the housing (12) is configured to receive the screw (1) between the two contact surfaces (19, 61) forming a radial gap therebetween.

7. The screw testing device according to any of the claims 1 to 6, **characterized in that** the measuring device (70) is arranged between the second housing member (62) and a further member (65), wherein the second housing member (62) and the further member (65) are arranged so as to be movable relative to one another in the direction of the longitudinal axis (22) and about the longitudinal axis (22), and wherein the measuring device (70) is preferably arranged in direct contact with the second housing member (62) and the further member (65).

8. The screw testing device according to any of the claims 1 to 7, **characterized in that** at least the first and second housing members (14, 62) are shaped as sleeves or rings.

9. Use of a screw load testing device (10) configured according to any of the claims 1 to 8 for performing load tests on breakaway screws (2).

10. A method for testing a screw (1), in particular a breakaway screw (2), by using a screw load testing device (10) configured according to any of the claims 1 to 8, said method comprising at least the following steps:
- Moving the first and the second housing member (14, 62) by activating the clamping device (24) from the first to the second position while increasing the axial distance (a1, a2) between two contact surfaces (19, 61) for the screw (1)
- Mounting the screw (1) and the mating element (5) that cooperates with the screw (1)
- Applying a tightening torque to the screw (1)
- Deactivating the clamping device (24) after the end of the load test
- Removing the screw (1)

11. The method according to claim 10, **characterized in that** after deactivation of the clamping device (24) the two housing members (14, 62) are moved from the second position towards the first position by resetting means (46).

12. The method according to claim 10 or 11, **characterized in that** for removing the screw (1) an axial gap (76) is created between the first contact surface (19) and a portion (7) of the screw (1) cooperating with the first contact surface (19) .

13. The method according to any of the claims 10 to 12, **characterized in that** the hydraulic pressure of a hydraulic medium in a pressure chamber (38) of the clamping device (24) is increased by increasing a tightening torque of the screw (1).

## Revendications

1. Dispositif d'essai des charges de vis (10) comprenant un boîtier (12) configuré pour arranger une vis (1) et un élément complémentaire (5) coopérant avec une partie filetée (4) de la vis (1) et en particulier formé comme un écrou fileté (6), ledit boîtier (12) comprenant une première pièce de boîtier (14) configurée pour coopérer au moins indirectement avec une partie (7) connectée de façon monolithique avec la vis (1), comprenant en outre une deuxième pièce de boîtier (62) configurée pour coopérer avec l'élément complémentaire (5), dans lequel les deux pièces de boîtier (14, 62) sont disposées de manière mobile l'une par rapport à l'autre au moins dans la direction d'un axe longitudinal (22), ledit dispositif d'essai des charges de vis (10) comprenant en outre un dispositif de mesure (70) pour détecter une force axiale F agissant sur la vis (1) et/ou pour détecter un couple M agissant sur la vis (1),
dans lequel les deux pièces de boîtier (14, 62) peuvent être déplacées d'une première position au moins dans une deuxième position au moyen d'un dispositif de serrage (24), en ce que dans la première position, une première distance (a1) dans la direction de l'axe longitudinal (22) entre deux surfaces de contact (19, 61) configurées pour coopérer avec la vis (1) et l'élément complémentaire (5) est plus petite qu'une deuxième distance (a2) des deux surfaces de contact (19, 61) dans la deuxième position,
**caractérisé en ce qu'**une pièce de format (16) comprenant plusieurs trous de passage (18) de diamètres différents pour y faire passer une partie cylindrique (3) de la vis (1) est prévue comme élément complémentaire pour la partie (7) connectée de façon monolithique avec la vis (1), et **en ce que** la pièce de format (16) peut être disposée de manière fixe en rotation en contact axial avec la première pièce de boîtier (14) .

2. Dispositif d'essai des vis selon la revendication 1, **caractérisé en ce que** des moyens de rappel (46) sont prévus est configurés pour déplacer les deux pièces de boîtier (14, 62) par une force de rappel dans la direction de la première position.

3. Dispositif d'essai des vis selon la revendication 2, **caractérisé en ce que** les moyens de rappel (46) sont formés sous forme d'au moins un élément de ressort (45) disposé dans la zone du dispositif de serrage (24) entre deux pièces (26, 28) du dispositif de serrage (24) qui sont disposées de manière mobile l'une par rapport à l'autre dans la direction de l'axe longitudinal (22).

4. Dispositif d'essai des vis selon l'une des revendications 1 à 3, **caractérisé en ce que** le dispositif de serrage (24) est formé comme dispositif de serrage (24) hydraulique.

5. Dispositif d'essai des vis selon la revendication 4, **caractérisé en ce que** la pression hydraulique d'un fluide hydraulique dans une chambre de pression (38) du dispositif de serrage (24) peut être augmentée en augmentant le couple de serrage de la vis (1).

6. Dispositif d'essai des vis selon l'une des revendications 1 à 5, **caractérisé en ce que** le boîtier (12) est configuré pour recevoir la vis (1) entre les deux surfaces de contact (19, 61) en formant un espace radial.

7. Dispositif d'essai des vis selon l'une des revendications 1 à 6, **caractérisé en ce que** le dispositif de mesure (70) est disposé entre la deuxième pièce de boîtier (62) et une autre pièce (65), dans lequel la deuxième pièce de boîtier (62) et l'autre pièce (65) sont disposées de manière mobile l'une par rapport à l'autre dans la direction de l'axe longitudinal (22) et autour de l'axe longitudinal (22), et dans lequel le dispositif de mesure (70) est disposé de préférence en contact direct avec la deuxième pièce de boîtier (62) et l'autre pièce (65) .

8. Dispositif d'essai de vis selon l'une des revendications 1 à 7, **caractérisé en ce qu'**au moins la première et la deuxième pièce de boîtier (14, 62) sont formées en forme de manchons ou d'anneaux.

9. Utilisation d'un dispositif d'essai des charges de vis (10) configuré comme défini dans l'une quelconque des revendications 1 à 8 pour effectuer des essais de charge sur des vis à rupture (2).

10. Procédé d'essai d'une vis (1), en particulier d'une vis à rupture (2), en utilisant un dispositif d'essai des charges de vis (10) configuré comme défini dans l'une quelconque des revendications 1 à 8, ledit procédé comprenant au moins les étapes suivantes :
- Déplacer, en activant ledit dispositif de serrage (24), la première et la deuxième pièce de boîtier (14, 62) de la première à la deuxième position tout en augmentant la distance axiale (a1, a2) entre deux surfaces de contact (19, 61) pour la vis (1) ;
- Montage de la vis (1) et de l'élément complémentaire (5) coopérant avec la vis (1) ;
- Appliquer un couple de serrage à la vis (1) ;
- Désactivation du dispositif de serrage (24) après la fin de l'essai de charge ;
- Retirer la vis (1).

11. Procédé selon la revendication 10, **caractérisé en ce qu'**après la désactivation du dispositif de serrage (24) les deux pièces du boîtier (14, 62) sont déplacées par des moyens de rappel (46) de la deuxième position vers la première position.

12. Procédé selon la revendication 10 ou 11, **caractérisé en ce que** pour retirer la vis (1) une fente axial (76) est créée entre la première surface de contact (19) et une partie (7) de la vis (1) coopérant avec la première surface de contact (19).

13. Procédé selon l'une quelconque des revendications 10 à 12, **caractérisé en ce que** la pression hydraulique d'un fluide hydraulique dans une chambre de pression (38) du dispositif de serrage (24) est augmentée en augmentant un couple de serrage de la vis (1).
